# EUROPÄISCHE PATENTSCHRIFT

(11) **EP 2 790 290 B1**
(45) Veröffentlichungstag und Bekanntmachung des Hinweises auf die Patenterteilung: **19.07.2017**
(21) Anmeldenummer: 14001285.7
(22) Anmeldetag: 08.04.2014
(51) Int. Cl.: H02J 7/00, H02J 7/32, H02J 3/32, H01M 10/44, H01M 10/42

(54) **Batteriespeicheranlage und Verfahren zum Betrieb einer Batteriespeicheranlage**
Battery storage installation and method for operating a battery storage installation
Installation de batterie d'accumulateurs et procédé de fonctionnement d'une installation de batterie d'accumulateurs

(30) Priorität: 09.04.2013 DE 102013005974
(43) Veröffentlichungstag der Anmeldung: 15.10.2014
(73) Patentinhaber: Ilmberger, Florian, 80649 München (DE); Schäfer, Volkmar, 85276 Pfaffenhofen (DE)
(72) Erfinder: Ilmberger, Florian, 80649 München (DE); Schäfer, Volkmar, 85276 Pfaffenhofen (DE)
(74) Vertreter: Liebl, Thomas

(56) Entgegenhaltungen:
- EP-A2- 1 528 652
- WO-A2-2012/025098
- DE-A1-102011 056 377
- US-A- 4 323 788
- US-A1- 2012 161 564

## Beschreibung

Die Erfindung betrifft ein Verfahren zum Betrieb einer Batteriespeicheranlage gemäß dem Oberbegriff des Patentanspruchs 1 sowie eine Batteriespeicheranlage gemäß dem Patentanspruch 8.

Batteriespeicheranlagen können zur Energiespeicherung mit Batterien auf elektrochemischer Basis bestückt sein, wobei zur Einspeisung elektrischer Energie in ein als Wechselspannungsnetz ausgebildetes Versorgungsnetz die elektrische Gleichspannung der Batterien mittels Wechselrichter in eine geeignete Wechselspannung umgewandelt wird. Derartige Batteriespeicheranlagen sind in der Online-Enzyklopädie "Wikipedia" beschrieben (http://de wikipedia org/wiki/Batterie-Speicherkraftwerk).

Batteriespeicheranlagen können unter anderem zur unterbrechungsfreien Stromversorgung eingesetzt werden, um beispielsweise kurze Stromausfälle in einem Versorgungsnetz für Kliniken, Rechenanlagen oder auch in einem öffentlichen Versorgungsnetz zu überbrücken. Außerdem können derartige Stromspeicheranlagen auch zur Frequenzregulierung in Wechselspannungsnetzen verwendet werden.

Aus der WO 2007/104167 A1 ist ein Verfahren zum Betreiben einer Batteriespeicheranlage bekannt, wobei die Speicheranlage mehrere Batteriegruppen umfasst, die über Schalteinrichtungen an einen Spannungswandler anschaltbar sind. Der Spannungswandler wandelt die von den Speicherbatterien gelieferte Gleichspannung in eine geeignete Wechselspannung um, die dann in ein Wechselspannungsnetz eingespeist wird. Eine Steuereinheit steuert die Lade- und Entladezeiten der Batteriespeicheranlage.

Aus der DE 10 2012 207 605 A1 ist eine Batteriespeicheranlage mit Kraftfahrzeugbatterien bekannt, bei der die in Elektro-Kraftfahrzeugen befindlichen Kraftfahrzeugbatterien an ein Kraftwerk angeschlossen sind, von dem die Batterien in Ladephasen Strom beziehen, dagegen in Entladephasen an das Kraftwerk Strom liefern. Dabei erfolgt ein Einspeisen von elektrischer Energie aus den Kraftfahrzeugbatterien in das Kraftwerk dann, wenn vom Kraftwerk eine entsprechende Stromnachfrage vorliegt. Bei den Kraftfahrzeugen die hier in die Stromversorgung eingebunden sind, handelt es sich um Elektrofahrzeuge, die verhältnismäßig große elektrische Energiespeicher besitzen.

Die DE 10 2011 105 417 A1 betrifft ein Batteriespeicherwerk mit einem Batteriespeicher, der eine Vielzahl von Industriebatterien aufweist. Das Batteriespeicherwerk weist eine Steuerung auf, die dazu ausgebildet ist, für eine der Industriebatterien oder für eine Gruppe der Industriebatterien die Lade- und Entladeströme beim Bereitstellen der Regelleistung individuell zu steuern und eine Information über die verbleibende Lebensdauer zu speichern. Als Industriebatterien werden Traktionsbatterien verwendet, wie sie als Energielieferant für elektrische Verbraucher, hauptsächlich für elektrisch angetriebene Fahrzeuge, aber auch für sonstige Verbraucher wie Leuchten, Kühl- oder Heizungsanlagen oder sonstige Elektromotoren Verwendung finden. In dem Batteriespeicherwerk können auch unterschiedliche Typen von Traktions- bzw. Industriebatterien Verwendung finden.

Die US 2012/0194139 A1 betrifft ein wiederaufladbares Batteriesystem, und zwar für Lithium-Ionen-Batterien. Zur Verlängerung der Lebensdauer von derartigen zyklisch aufladbaren Lithium-Ionen-Batterien wird eine Lade-/Entlade-Kontrolleinrichtung vorgesehen, die, wenn die Spannung eines Lithium-Ionen-Akkus während eines Entladens kleiner wird als ein vorgegebener Entladeschwellwert, die Entladung des Lithium-Ionen-Akkus stoppt und die Entladung eines weiteren Lithium-Ionen-Akkus startet.

Die DE 10 2011 056 377 A1 betrifft einen Energiespeicher mit einem Basismodul, das mehrere parallel zueinander geschaltete Stränge mit mehreren in Serie geschalteten Batteriezellen aufweist, wobei das Basismodul mit dem Stromnetz und mit einem lokalen elektrischen Energieerzeuger verbunden ist. Der Energiespeicher ist so ausgebildet, dass eine gleichzeitige Be- und Entladung erfolgt, das heißt während Strom abgegeben wird gleichzeitig durch Energieerzeuger bzw. das Stromnetz auch eine Aufladung stattfindet. Zur Vermeidung hoher Entladeströme ist eine Strombegrenzung verlangt.

Die US 2012/0268070 A1 beschreibt ein Konzept für elektrische Batterien für Hybridfahrzeuge, bei denen es grundsätzlich vorteilhaft wäre, Batterien mit einer hohen Speicherkapazität zu haben. Da einzelne Batterien physikalisch bedingt aber nicht beliebig groß ausgebildet werden können, werden eine Vielzahl von Batteriepacks parallel geschaltet. In Verbindung mit derartigen parallel geschalteten Batteriepacks kann es jedoch aufgrund der teils sehr großen Unterschiede in den Beladungszuständen der einzelnen Batteriepacks, beim Parallelschalten zu Lichtbögen kommen, die die Sicherheit gefährden können. Um dies zu vermeiden, wird eine Schalteinheit vorgesehen, die den Lade-/Entladepfad selektiv öffnen und schließen kann. Eine erste Steuereinheit soll den Ladezustand jedes Batteriepacks ermitteln und das Öffnen respektive Schließen der Schaltereinheit steuern. Eine zweite Steuereinheit ist vorgesehen, um die Ladezustände jedes Batteriepacks von der ersten Steuereinheit zu erhalten, so dass die zweite Steuereinheit die unterschiedlichen Batteriepacks hinsichtlich ihrer Ladezustände gruppieren kann. Anschließend wird diejenige Gruppe, die die größte Anzahl von Batteriepacks aufweist ausgewählt und die Batteriepacks der ausgewählten Gruppe parallel geschalten, um diese dann so parallel geschalteten Batteriepacks zu laden bzw. zu entladen. Dadurch soll sichergestellt werden, dass ein Unterschied in den Ladezuständen zwischen den parallel geschalteten Batteriepacks und den nicht-verbundenen Batteriepacks in einen vorbestimmten Bereich fällt und schließlich die nicht-verbundenen Batteriepacks zu den bereits parallel geschalteten Batteriepacks geschaltet werden können.

Die DE 10 2008 040 524 A1 betrifft den Betrieb eines batteriebetriebenen Hand- bzw. Elektrogerätes, und hier insbesondere von Werkzeugmaschinen, mit einer Regelung des Entladestroms mittels einer Pulsweitenmodulierung. Konkret wird hier ein System zum Ausgleich verschiedener Ladezustände durch Entlademanagement vorgeschlagen, bei dem die Batterie mit dem höheren Ladezustand zunächst so weit entladen wird, bis diese den Ladezustand der Batterie mit dem geringeren Ladezustand erreicht hat. Sodann werden beide Batterien wechselweise bis zur Entladeschlussspannung entladen.

Die US2012/0161564 A1 beschreibt ein autarkes, geschlossenes System zur Rückgewinnung von Energie, bei dem ein Elektromotor von mehreren Batterien gespeist wird, um diesen anzutreiben. Der Elektromotor treibt wiederum einen Generator an, der einen Verbraucher bedient und zudem gleichzeitig die Batterien laden soll, um das System unabhängig von einer externen Energieversorgung durch ein Versorgungsnetz oder anderer Antriebsstoffe zu machen.

Die EP 1 528 652 A2 zeigt weiter eine tragbare, unabhängige, elektrische Energiequelle, bei dem im Falle eines zu niedrigen Ladezustands einer ersten Batterie auf eine zweite Batterie umgeschalten wird.

Der Erfindung liegt die Aufgabe zugrunde, ein Verfahren zum Betrieb einer Batteriespeicheranlage sowie eine Batteriespeicheranlage anzugeben, mit dem bzw. mit der eine hohe elektrische Leistung funktionssicher und mit einfachen Mitteln in ein Versorgungsnetz eingespeist werden kann.

Die Lösung dieser Aufgabe gelingt mit den im Patentanspruch 1 angegebenen Merkmalen. Besonders vorteilhafte Weiterbildungen des erfindungsgemäßen Verfahrens sind in den Unteransprüchen 2 bis 6 offenbart. Gemäß dem kennzeichnenden Teil des Patenanspruchs 1 ist vorgesehen, dass als Batterien Kraftfahrzeug-Starterbatterien und/oder Blei-Akkumulatoren-Starterbatterien verwendet werden, und dass die Batteriegruppen unmittelbar zeitlich nacheinander während jeweils kurzer, vom Ladezustand der jeweiligen Batteriegruppe abhängiger Entladezeitabschnitte (zum Beispiel 10 bis 30 sec, was in etwa dem Startvorgang einer Kraftfahrzeugbatterie entspricht) mit einem hohen Entladestrom (zum Beispiel 300 bis 800 A) ein öffentliches Versorgungsnetz, das ein Niederspannungsnetz oder ein Mittelspannungsnetz oder ein Hochspannungsnetz oder ein Höchstspannungsnetz ist, speisen, so dass unmittelbar aufeinanderfolgende kurze Entladezeitabschnitte einen hohen Entladestrom über einen längeren ununterbrochenen Entladezeitraum ergeben.

Mit anderen Worten ist erfindungsgemäß vorgesehen, dass die in mehreren Batteriegruppen zusammengefassten Batterien durch Kraftfahrzeug-Starterbatterien und/oder Blei-Akkumulatoren-Starterbatterien gebildet sind, wobei die Batteriegruppen ein Versorgungsnetz unmittelbar zeitlich nacheinander während jeweils - im Vergleich zu einem Ladezeitraum - kurzer, vom Ladezustand der jeweiligen Batteriegruppe abhängiger Entladezeitabschnitte mit einem gegenüber einem Ladestrom hohen Entladestrom speisen und somit die unmittelbar aufeinanderfolgenden kurzen Entladezeitabschnitte einen von der Anzahl der Starterbatterien abhängigen Entladestrom (bzw. hohen Entladestrom) und damit eine in Abhängigkeit von der Anzahl der Starterbatterien definierte elektrische Leistungsabgabe (bzw. hohe elektrische Leistungsabgabe) an das Versorgungsnetz über einen gegenüber einer Entladung einer einzelnen Batteriegruppe längeren ununterbrochenen Entladezeitraum ergeben.

Bei einer Starterbatterie im Sinne der vorliegenden Erfindungsidee handelt es sich um solche Batterien, die aufgrund ihrer asymmetrischen Entlade- und Beladecharakteristik (zum einen Bereitstellung eines hohen Entladestroms über einen kurzen Zeitraum sowie zum anderen Beladung mit niedrigem Ladestrom über einen langen Zeitraum) an sich ungeeignet sind, um als Zyklus- und/oder Energiespeicher eingesetzt zu werden.

Zudem sind die erfindungsgemäßen Starterbatterien von Industriebatterien zu unterscheiden, die ihre gespeicherte Energie über längere Zeiträume abgeben. Derartige Industriebatterien finden zum Beispiel als Traktionsbatterien in elektrisch angetriebenen Fahrzeugen oder auch für sonstige Verbraucher Verwendung, zum Beispiel für Kühl- oder Heizungsanlagen.

Wie zuvor dargelegt ist die Hauptanforderung an eine Starterbatterie die extrem hohe Stromabgabe über einen kurzen Zeitraum von zum Beispiel 10 Sekunden (Hochstromfähigkeit). Diese Situation tritt zum Beispiel typischerweise beim Startvorgang eines Verbrennungsmotors auf. Bei tiefen Temperaturen gewinnt die Hochstromfähigkeit der Batterie zusätzlich an Bedeutung. Aus diesem Grund ist die Startkraft die wesentliche Kenngrösse einer Starterbatterie - angegeben als Kaltstartstrom.

Der Kaltstartstrom kann zum Beispiel analog zur Norm DIN EN 50342-1 (VDE 0510-1001) als diejenige Stromstärke in Ampere definiert werden, mit der eine vollgeladene und auf -18° C abgekühlte Batterie belastet werden kann, ohne dass die Klemmspannung während der ersten 10 Sekunden unter 7,5 V absinkt.

Dementsprechend sollte der Entladestrom der erfindungsgemäß verwendeten Starterbatterien bevorzugt im Bereich zwischen 20% bis 100% des Kaltstartstroms liegen.

Unter einem Versorgungsnetz im Sinne der vorliegenden Erfindungsidee ist ein öffentliches Versorgungsnetz bzw. ein Stromversorgungsnetz zu verstehen, das der Versorgung der Verbraucher mit Strom dient und die Verbindung mit den stromerzeugenden Kraftwerken auf bzw. über unterschiedliche Spannungsebenen herstellt. Dementsprechend kann das Versorgungsnetz bzw. das öffentliche Versorgungsnetz im Sinne der vorliegenden Erfindungsidee zum Beispiel ein Niederspannungsnetz sein. Das Niederspannungsnetz kann zum Beispiel mit einer Nenn- bzw. Netzspannung von 230 V oder 400 V bzw. im Sinne der hier zugrundegelegten Definition mit einer Nenn- bzw. Netzspannung bis einschließlich 1000 V betrieben werden. Bevorzugt ist das Versorgungsnetz jedoch ein Mittelspannungsnetz oder ein Hoch- bzw. Höchstspannungsnetz. Beispielsweise beträgt die Nenn- bzw.

Netzspannung im Mittelspannungsnetz zwischen 1 kV bis 30 kV. Im Hochspannungsnetz ist die Nenn- bzw. Netzspannung bevorzugt größer 30 kV bis 220 kV, im Höchstspannungsnetz bevorzugt mindestens 220kV.

Durch die erfindungsgemäße, aufeinanderfolgende Aktivierung einzelner mit Starterbatterien bestückter Batteriegruppen, von denen jede Batteriegruppe einen sehr hohen Entladestrom liefern kann, besteht die Möglichkeit, mit an sich für die Energiespeicherung ungeeigneten Starterbatterien über einen längeren Zeitraum einen hohen Entladestrom bereitzustellen, der eine entsprechend hohe Leistungsabgabe über einen längeren Zeitraum an ein Versorgungsnetz ermöglicht. Die Zusammenfassung der Starterbatterien in Batteriegruppen kann so erfolgen, dass auch Batterien mit unterschiedlichen Leistungsparametern verwendet werden können. Hierzu werden gleichartige Batterien in jeweils einer Batteriegruppe zusammengefasst. Batterien mit einer anderen Leistungscharakteristik werden in einer entsprechenden anderen Batteriegruppe zusammengefasst. Somit besteht sogar die Möglichkeit, dass auch ältere Batterien, die für den Einsatz in Kraftfahrzeugen nicht mehr geeignet sind, zu einer Batteriegruppe zusammengefasst werden, die dann beispielsweise einen hohen Entladestrom über einen etwas kürzeren Entladungszeitraum bereitstellt als eine Batteriegruppe mit beispielsweise neuen Batterien.

Durch eine Zusammenschaltung mehrerer Batteriegruppen in einem Parallelverbund können während eines Entladezeitabschnitts sehr hohe Entladeströme realisiert werden. Dadurch ist es beispielsweise auch möglich, die Batteriespeicheranlage als Reservekraftwerk zu verwenden, mit dem Stromausfälle oder sehr hohe Spitzenbelastungen in einem öffentlichen Versorgungsnetz überbrückt werden können. Leistungen im Megawatt-Bereich sind auf diese Weise realisierbar.

Um geeignete Batteriegruppen bilden zu können, wird weiterhin vorgeschlagen, zunächst eine Klassifizierung der vorhandenen Batterien mittels einer Messung ihrer elektrischen Eigenschaften vorzunehmen, so dass dann jeweils Batterien mit gleichartiger Klassifizierung in einer bzw. in mehreren gleichartigen Batteriegruppen zusammengefasst werden. Auf diese Weise können sehr unterschiedliche Batterietypen und auch Batterien mit sehr unterschiedlichem Leistungsstandard in der Batteriespeicheranlage eingesetzt werden. Ein besonders großer Vorteil besteht darin, auch Altbatterien mit stark reduzierter Speicherkapazität zur Stromversorgung in der Batteriespeicheranlage zu verwenden.

Altbatterien sind solche Starterbatterien, die zum Zwecke der Entsorgung, zum Beispiel von einem Fachhändler, einer Autowerkstatt, etc. an ein Entsorgungsunternehmen abgegeben werden müssen, da sie den benötigten bzw. definiert vorgegebenen Startstrom nicht mehr abgeben können bzw. ihre Kapazität unter einen definiert vorgegebenen Prozentsatz, bezogen auf ihre Nennkapazität, gesunken ist. Dies kann zum Beispiel der Fall sein, wenn die Kapazität der Starterbatterie unter 80% ihrer Nennkapazität gesunken ist.

Zur Klassifizierung der Batterien wird bevorzugt die Speicherkapazität herangezogen, so dass derart gleichklassifizierte Batterien eine Batteriegruppe bilden, die dann eine entsprechend vorgegebene Speicherkapazität und damit eine entsprechend vorgegebene maximale Entladedauer besitzt. Alternativ oder zusätzlich könnten aber auch weitere Parameter herangezogen werden, zum Beispiel die Bauart und/oder die Dimensionierung und/oder die Polanordnung und/oder die Polgröße, um nur einige weitere Beispiele zu nennen.

Der Betrieb der Speicheranlage erfolgt vorzugsweise so, dass fortlaufend die Funktionsfähigkeit der verwendeten Batterien überprüft wird. Damit können defekte Batterien erkannt und durch Anschaltung funktionsfähiger Reservebatterien ersetzt werden. Damit ausreichend Reservebatterien in einer Batteriegruppe vorhanden sind, können je nach Klassifizierung der Batteriegruppe mehr oder weniger Reservebatterien vorgesehen sein. Eine aus Altbatterien bestehende Batteriegruppe wird demzufolge mit einer höheren Anzahl von Reservebatterien bestückt als eine aus neuwertigen Batterien bestehende Batteriegruppe.

Das Verfahren zum Betrieb der Batteriespeicheranlage sieht weiterhin vor, dass während eines Ladevorgangs zwei oder mehrere Batteriegruppen parallel geschaltet werden, so dass der Ladevorgang an den einzelnen Batterien mit einem niedrigen Ladestrom über einen längeren Zeitraum durchgeführt werden kann. Mit anderen Worten werden während des zum Entladezeitraum zeitversetzten Ladezeitraums die Batteriegruppen parallel geschaltet, um den Ladestrom auf die Batteriegruppen aufzuteilen und die Batterien mit dem gegenüber den hohen Entladeströmen niedrigeren Ladestrom zu laden. Dies ist besonders vorteilhaft bei den in der Batteriespeicheranlage verwendeten Starterbatterien, da diese, wie zuvor dargestellt, zwar sehr hohe Entladeströme ermöglichen, jedoch mit wesentlich niedrigeren Ladeströmen geladen werden müssen.

Der Erfindung liegt die weitere Aufgabe zugrunde, eine Batteriespeicheranlage zur Bereitstellung hoher elektrischer Leistung zu schaffen, mit der unter Verwendung von herkömmlichen Starterbatterien, wie diese für Kraftfahrzeuge verwendet werden, eine Einspeisung hoher Entladeströme in ein Versorgungsnetz möglich ist.

Die Lösung der sich auf die Batteriespeicheranlage beziehenden Aufgabe erhält man mit den Merkmalen des Patentanspruchs 7. Vorteilhafte Weiterbildungen der erfindungsgemäßen Batteriespeicheranlage sind in den Patentansprüchen 8 bis 10 offenbart.

Damit die durch Starterbatterien gebildete Batteriespeicheranlage zur Bereitstellung hoher elektrischer Leistungen geeignet ist, besitzt die Batteriespeicheranlage eine Schalteinrichtung zur Durchführung einer wahlfreien Parallelschaltung von einzelnen oder mehreren Batteriegruppen. Dadurch kann ein Gesamtentladestrom realisiert werden, der aus der Summe der Einzelentladeströme der einzelnen Batteriegruppen gebildet wird. Je nach Anforderung an die einzuspeisende elektrische Leistung in ein Versorgungsnetz, welches von der Batteriespeicheranlage gespeist wird, können mehr oder weniger Batteriegruppen parallel geschaltet werden.

Für einen sicheren Betrieb der Batteriespeicheranlage ist es besonders vorteilhaft, dass die Batterien einer Batteriegruppe jeweils zumindest annähernd eine gleich große Ladekapazität haben, dass mehrere Klassen von Batteriegruppen mit unterschiedlichen Leistungsparametern vorhanden sind, und dass eine Schalteinrichtung zur Umschaltung von einer Batteriegruppe einer bestimmten Leistungsklasse auf eine andere Batteriegruppe der gleichen Leistungsklasse vorgesehen ist.

Eine Einteilung der Batteriegruppen in Leistungsklassen hat unter anderem den Vorteil, dass beim Ausfall einer Batteriegruppe mit einer bestimmten Leistungsklasse auf eine Batteriegruppe mit gleicher Leistungsklasse oder zumindest mit annähernd gleicher Leistungsklasse umgeschaltet werden kann. Dadurch reduzieren sich regelungstechnische Maßnahmen, die sonst erforderlich wären, um eine elektronische Leistungsanpassung vorzunehmen. Eine Unterteilung der Batteriegruppen in unterschiedliche Leistungsklassen ergibt insbesondere auch die Möglichkeit, sehr unterschiedliche Batterien bzw. Batterien mit sehr unterschiedlichem Qualitäts- und Leistungsstandards zu verwenden. In einer derartigen Batteriespeicheranlage können insbesondere auch Altbatterien, die als Starterbatterien in Kraftfahrzeugen nicht mehr weiterverwendet werden können, eingesetzt werden.

Die Erfindung wird nachfolgend anhand eines in der Zeichnung dargestellten Ausführungsbeispiels näher erläutert.

Es zeigen:
- Figur 1: das Blockschaltbild einer Batteriespeicheranlage mit einer Vielzahl von Batteriegruppen, und
- Figur 2: veranschaulicht die zeitliche Entnahme eines Entladestroms sowie die Einspeisung eines Ladestroms bei einer vorgegebenen Anzahl von Batteriegruppen.

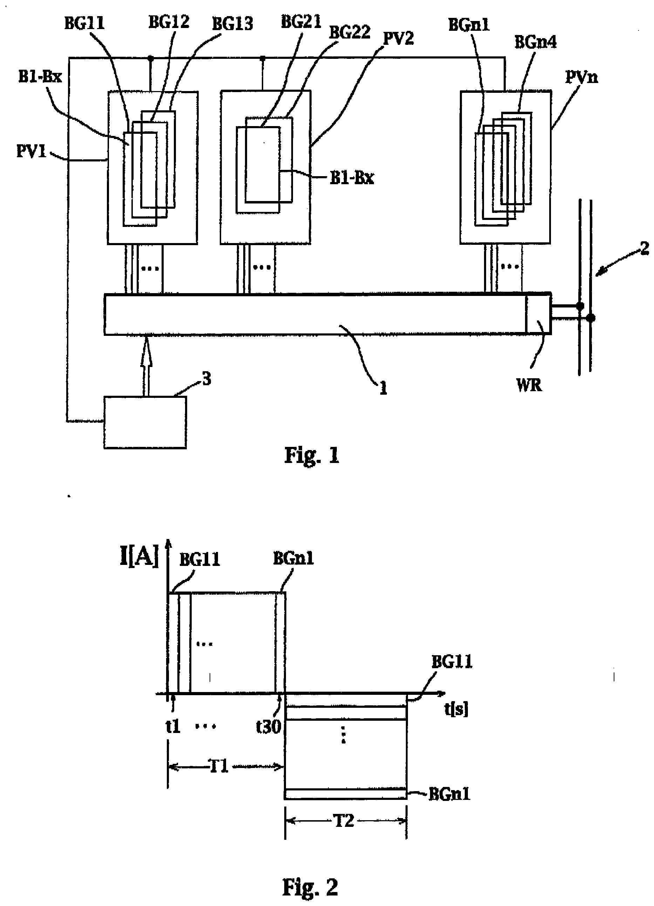

Die in Figur 1 dargestellte Batteriespeicheranlage besitzt eine Vielzahl von Batteriegruppen BG11 bis BGn4, die jeweils aus einer Vielzahl hier nicht näher dargestellter Batterien B1 bis Bx bestehen. Die Batteriegruppen BG11 bis BG13 können einen Parallelverbund PV1 bilden, wobei dann beispielsweise die Batteriegruppen BG11 bis BG13 parallel geschaltet sein können. In entsprechender Weise können die weiteren Batteriegruppen zu Parallelverbünden PV2 bis PVn Parallelschaltungen mit jeweils zwei oder mehreren Batteriegruppen bilden.

Die Batteriegruppen BG11 bis BGn4 können mittels einer Schalteinrichtung 1, die auch als Koppelnetzwerk bezeichnet werden kann, an ein Versorgungsnetz 2, welches ein Wechselspannungsnetz ist, angeschaltet werden. Damit die von den Batterien der Batteriegruppen bereitgestellte elektrische Energie in das Versorgungsnetz 2 eingespeist werden kann, muss eine Umwandlung der Gleichspannung in eine Wechselspannung mittels Wechselrichter erfolgen. Hierzu können in der Schalteinrichtung 1 ein oder mehrere Wechselrichter WR vorgesehen sein, das heißt die erforderlichen Wechselrichter können den einzelnen Batterien oder den einzelnen Batteriegruppen BG11 bis BGn4 zugeordnet sein, zum Beispiel können zugeordnet zu den einzelnen Batteriegruppen BG11 bis BGn4 eine Vielzahl von Wechselrichtern in den Batteriegruppen eingesetzt sein.

Mittels einer Steuereinrichtung 3 kann in Abhängigkeit von der jeweiligen Netzsituation im Versorgungsnetz 2 eine Aktivierung von einzelnen oder mehreren Batteriegruppen vorgenommen werden, um eine erforderliche Stromeinspeisung in das Versorgungsnetz 2 zu erhalten. In gleicher Weise kann in Zeiten, in denen das Versorgungsnetz 2 einen Leistungsüberschuss bzw. einen nur geringen Leistungsbedarf hat, eine Aufladung der Batterien B1 bis Bx der verschiedenen Batteriegruppen BG11 bis BGn4 von der Steuereinrichtung 3 veranlasst werden. Hierzu wird die Schalteinrichtung 1 entsprechend von der Steuereinrichtung 3 betätigt, so dass ein Ladestrom in die aufzuladenden Batterien eingespeist werden kann. Die hierzu erforderlichen Gleichrichter können den einzelnen Batterien oder den einzelnen Batteriegruppen BG11 bis BGn4 zugeordnet sein.

Mittels einer Batteriespeicheranlage, wie sie in Figur 1 dargestellt ist, können sehr unterschiedliche Belastungsanforderungen erfüllt werden. Außerdem können die in einem Parallelverbund PV1 bis PVn zusammengefassten Batteriegruppen so ausgewählt sein, dass die Batteriegruppen eines Parallelverbundes einer zumindest annähernd gleichen Leistungsklasse angehören. So können beispielsweise die Batteriegruppen BG11 bis BG13 gleichartige neuwertige Starterbatterien umfassen, während die Batteriegruppen BG21 und BG22 aus alten Starterbatterien bzw. Altbatterien bestehen, die nur noch eine Speicherkapazität von beispielsweise 80 % haben. Die unterschiedliche Leistungsklasse verschiedener Batteriegruppen ist in Figur 1 durch eine unterschiedliche Größe der dargestellten Rechtecke, die jeweils eine Batteriegruppe symbolisieren, veranschaulicht, wie zum Beispiel bei den Batteriegruppen BG11 und BG21.

In Figur 2 ist der Stromverlauf während eines Entladezeitraums T1 und während eines Ladezeitraums T2 dargestellt, wobei während des Entladezeitraums T1 beispielsweise 30 Batteriegruppen BG11 bis BGn1 für jeweils kurze Zeitabschnitte t1 bis t30 zeitlich nacheinander zur Unterstützung des Versorgungsnetzes 2 angeschaltet und dabei entladen werden. Dagegen sind während des Ladezeitraums T2 die beispielhaften 30 Batteriegruppen BG11 bis BGn1 parallel geschaltet, wodurch sich der gesamte Ladestrom von beispielsweise 600 A auf die beispielhaft 30 Batteriegruppen aufteilt. Beim Entladevorgang wird dagegen im hier gezeigten Beispielfall von jeder Batteriegruppe ein Entladestrom in Höhe von 600 A zur Unterstützung des Versorgungsnetzes 2 abgegeben.

Der Entladevorgang kann eine gleiche Zeit T1 andauern, wie der Ladevorgang, so dass T1 und T2 beispielsweise 15 Minuten betragen. Die kurzen Entladezeiten t1 bis t30 betragen somit tn=T1/30=15min/30=30Sekunden, wenn jede Batteriegruppe BG11 bis BGn1 für eine gleich kurze Entladezeit zur Stromversorgung aktiviert wird. Je nach Leistungsmerkmal der unterschiedlichen Batteriegruppen können die einzelnen Entladezeiten aber auch variieren.

Wie in der Figur 2 gezeigt findet der Ladevorgang zeitversetzt zum Entladevorgang statt, wobei sich der Ladezeitraum T2 unmittelbar an den Entladezeitraum T1 anschließen kann. Alternativ dazu kann aber auch vorgesehen sein, dass sich am Ende eines Entladevorgangs und damit am Ende eines Entladezeitraums T1 eine definiert vorgegebenen Pausenzeit (zum Beispiel entsprechend der Zeitdauer des Entladezeitraums T1 und/oder des Ladezeitraums T2) anschließt, bevor der Ladevorgang gestartet wird. Auch an den Ladezeitraum T2 kann sich wiederum ein Pausenzeitraum anschließen, bevor ein Entladevorgang gestartet wird. Die Pausenzeiträume können wenigstens zum Teil gleich lang oder aber auch wenigstens zum Teil unterschiedlich lang sein.

Die Batterien B1 bis Bx der einzelnen Batteriegruppen sind hier bevorzugt durch Blei-Akkumulatoren-Starterbatterien und/oder Kraftfahrzeug-Starterbatterien gebildet. Und diese sind wiederum wenigstens zum Teil durch Kraftfahrzeug-Altbatterien gebildet.

## Patentansprüche

1. Verfahren zum Betrieb einer Batteriespeicheranlage zur Bereitstellung hoher elektrischer Leistung mit einer Vielzahl von zyklisch wiederaufladbaren Batterien (B1 bis Bx), die in mehreren Batteriegruppen (BG11 bis BGn4) zusammengefasst sind, wobei als Batterien (B1 bis Bx) Kraftfahrzeug-Starterbatterien und/oder Blei-Akkumulatoren-Starterbatterien verwendet werden, und die Batteriegruppen (BG11 bis BGn4) unmittelbar zeitlich nacheinander während jeweils kurzer, vom Ladezustand der jeweiligen Batteriegruppe (BG11 bis BGn4) abhängiger Entladezeitabschnitte (t1 bis t30) mit einem hohen Entladestrom ein öffentliches Versorgungsnetz (2), das ein Niederspannungsnetz oder ein Mittelspannungsnetz oder ein Hochspannungsnetz oder ein Höchstspannungsnetz ist, speisen, so dass unmittelbar aufeinanderfolgende kurze Entladezeitabschnitte (t1 bis t30) einen hohen Entladestrom (I) über einen längeren ununterbrochenen Entladezeitraum (T1) ergeben, und wobei mehrere Batteriegruppen (BG11 bis BGn) während eines Ladevorgangs parallel geschaltet werden, dergestalt, dass während eines zum Entladezeitraum (T1) zeitversetzten Ladezeitraums (T2) die Batteriegruppen (BG11 bis BGn) parallel geschaltet werden, um den Ladestrom auf die Batteriegruppen (BG11 bis BGn) aufzuteilen und die Batterien mit dem gegenüber den hohen Entladeströmen niedrigeren Ladestrom zu laden.

2. Verfahren nach Anspruch 1, **dadurch gekennzeichnet, dass** zwei oder mehrere Batteriegruppen (BG11 bis BG13) während eines Entladezeitabschnitts (t1 bis t30) parallel geschaltet werden und somit einen Parallelverbund (PV1) bilden, und dass mehrere Parallelverbünde (PV1 bis PVn) zeitlich nacheinander während der kurzen Entladezeitabschnitte (t1 bis t30) einen Entladestrom (I) in das Versorgungsnetz (2) einspeisen.

3. Verfahren nach einem der Ansprüche 1 oder 2, **dadurch gekennzeichnet, dass** zur Bildung von Batteriegruppen (BG11 bis BGn4) zunächst eine Klassifizierung der vorhandenen Batterien (B1 bis Bx) mittels einer Messung ihrer elektrischen Eigenschaften erfolgt, und dass jeweils Batterien (B1 bis Bx) mit gleichartiger Klassifizierung in einer oder mehreren gleichartigen Batteriegruppen (BG11 bis BG13) zusammengefasst werden.

4. Verfahren nach Anspruch 3, **dadurch gekennzeichnet, dass** zur Klassifizierung die Speicherkapazität der einzelnen Batterien (B1 bis Bx) gemessen wird, und dass Batterien mit zumindest annähernd gleicher Speicherkapazität in Batteriegruppen (BG11 bis BG13; BG21, BG22; BGn1 bis BGn4) zusammengefasst werden.

5. Verfahren nach einem der vorhergehenden Ansprüche, **dadurch gekennzeichnet, dass** die Batterien (B1 bis Bx) jeder Batteriegruppe (BG11 bis BGn4) in regelmäßigen Zeitabständen auf Funktionsfähigkeit geprüft werden, und dass dabei eine defekt festgestellte Batterie (B1 bis Bx) von der Batteriegruppe (BG11 bis BGn4) abgeschaltet und durch eine Anschaltung einer in der betroffenen Batteriegruppe (BG11 bis BGn4) vorhandenen Reservebatterie ersetzt wird.

6. Verfahren nach einem der vorhergehenden Ansprüche, **dadurch gekennzeichnet, dass** als Starterbatterien (B1 bis Bx) Altbatterien verwendet werden, deren Kapazität unter einen definiert vorgegebenen Prozentsatz, bezogen auf ihre Nennkapazität, gesunken ist.

7. Batteriespeicheranlage eingerichtet zur Durchführung eines Verfahrens nach einem der vorhergehenden Ansprüche, mit einer Vielzahl von zyklisch wiederaufladbaren Batterien (B1 bis Bx), die in Batteriegruppen (BG11 bis BGn4) zusammengefasst sind, wobei die Batterien (B1 bis Bx) durch Kraftfahrzeug-Starterbatterien und/oder Blei-Akkumulatoren-Starterbatterien gebildet sind, und wobei eine Schalteinrichtung (1) zur Durchführung einer wahlfreien Parallelschaltung von einzelnen oder mehreren Batteriegruppen (BG11 bis BGn4) zur Stromeinspeisung in das Versorgungsnetz (2) vorgesehen ist, wobei die Schalteinrichtung dazu eingerichtet ist, mehrere Batteriegruppen (BG11 bis BGn) während eines Ladevorgangs parallel zu schalten, dergestalt, dass während eines zum Entladezeitraum (T1) zeitversetzten Ladezeitraums (T2) die Batteriegruppen (BG11 bis BGn) parallel geschaltet werden, um den Ladestrom auf die Batteriegruppen (BG11 bis BGn) aufzuteilen und die Batterien mit dem gegenüber den hohen Entladeströmen niedrigeren Ladestrom zu laden.

8. Batteriespeicheranlage nach Anspruch 7, **dadurch gekennzeichnet, dass** die Batterien (B1 bis Bx) einer Batteriegruppe (BG11 bis BGn4) jeweils zumindest annähernd eine gleich große Ladekapazität haben, dass mehrere Klassen von Batteriegruppen (BG11 bis BGn4) mit unterschiedlichen Leistungsparametern vorhanden sind, und dass die Schalteinrichtung (1) bei Bedarf eine Umschaltung von einer Batteriegruppe (zum Beispiel BG11) einer bestimmten Leistungsklasse auf eine andere Batteriegruppe (zum Beispiel BG12) der gleichen Leistungsklasse ausführt.

9. Batteriespeicheranlage nach einem der Ansprüche 7 oder 8, **dadurch gekennzeichnet, dass** in den Batteriegruppen (BG11 bis BGn4) jeweils zumindest eine Reservebatterie vorgesehen ist, die bei einer defekt festgestellten Batterie (B1 bis Bx) der Batteriegruppe (BG11 bis BGn4) angeschaltet ist und die defekte Batterie ersetzt.

10. Batteriespeicheranlage nach einem der Ansprüche 7 bis 9, **dadurch gekennzeichnet, dass** die Starterbatterien (B1 bis Bx) Altbatterien sind, deren Kapazität unter einen definiert vorgegebenen Prozentsatz, bezogen auf ihre Nennkapazität, gesunken ist.

## Claims

1. Method for operating a battery storage installation for the purpose of providing high electrical power, said battery storage installation having a multiplicity of cyclically rechargeable batteries (B1 to Bx), which are combined in a plurality of battery groups (BG11 to BGn4), wherein the batteries (B1 to Bx) used are motor vehicle starter batteries and/or lead-acid rechargeable starter batteries, and, during discharging periods (t1 to t30), which are in each case shorter and dependent on the state of charge of the respective battery group (BG11 to BGn4), the battery groups (BG11 to BGn4) immediately successively supply a high discharge current to a public power supply network (2), said public power supply network being a low voltage network or a medium voltage network or a high voltage network or an ultra-high voltage network, with the result that immediately consecutive short discharging periods (t1 to t30) produce a high discharge current (I) over a longer uninterrupted discharging time (T1), and wherein, during a charging process, a plurality of battery groups (BG11 to BGn) are connected in parallel in such a way that, during a charging time (T2) that is offset with respect to time from the discharging time (T1), the battery groups (BG11 to BGn) are connected in parallel, in order to divide the charge current across the battery groups (BG11 to BGn) and to charge the batteries with the charge current that is lower compared to the high discharge currents.

2. Method according to Claim 1, **characterized in that**, during a discharging period (t1 to t30), two or more battery groups (BG11 to BG13) are connected in parallel and thus form a parallel connected system (PV1), and **in that**, during the short discharging periods (t1 to t30), a plurality of parallel connected systems (PV1 to PVn) successively feed a discharge current (I) to the power supply network (2).

3. Method according to either of Claims 1 and 2, **characterized in that**, in order to form battery groups (BG11 to BGn4), the present batteries (B1 to Bx) are firstly classified by means of measuring the electrical properties thereof, and **in that** in each case batteries (B1 to Bx) having a similar classification are combined in one or more similar battery groups (BG11 to BG13).

4. Method according to Claim 3, **characterized in that**, for the purpose of classification, the storage capacity of the individual batteries (B1 to Bx) is measured, and **in that** batteries having at least approximately identical storage capacities are combined in battery groups (BG11 to BG13; BG21, BG22; BGn1 to BGn4).

5. Method according to one of the preceding claims, **characterized in that** the operability of the batteries (B1 to Bx) of each battery group (BG11 to BGn4) is checked at regular time intervals, and **in that**, during said check, a battery (B1 to Bx) that has been determined as faulty is disconnected from the battery group (BG11 to BGn4) and is replaced by connecting a reserve battery that is present in the affected battery group (BG11 to BGn4).

6. Method according to one of the preceding claims, **characterized in that** the starter batteries (B1 to Bx) used are old batteries, the capacity of which has dropped below a defined prescribed percentage, based on the rated capacity thereof.

7. Battery storage installation, configured to perform a method according to one of the preceding claims, having a multiplicity of cyclically rechargeable batteries (B1 to Bx), which are combined in battery groups (BG11 to BGn4), wherein the batteries (B1 to Bx) are formed by motor vehicle starter batteries and/or lead-acid rechargeable starter batteries, and wherein a switching device (1) is provided for the purpose of optionally connecting individual or a plurality of battery groups (BG11 to BGn4) in parallel for the purpose of feeding power to the power supply network (2), wherein the switching device is configured, during a charging process, to connect a plurality of battery groups (BG11 to BGn) in parallel in such a way that, during a charging time (T2) that is offset with respect to time from the discharging time (T1), the battery groups (BG11 to BGn) are connected in parallel, in order to divide the charge current across the battery groups (BG11 to BGn) and to charge the batteries with the charge current that is lower compared to the high discharge currents.

8. Battery storage installation according to Claim 7, **characterized in that** the batteries (B1 to Bx) of a battery group (BG11 to BGn4) each have at least approximately the same size charging capacity, **in that** a plurality of classes of battery groups (BG11 to BGn4) having different performance parameters are present, and **in that**, when required, the switching device (1) switches over from one battery group (for example BG11) of a specific performance class to another battery group (for example BG12) of the same performance class.

9. Battery storage installation according to either of Claims 7 and 8, **characterized in that** in each case at least one reserve battery is provided in the battery groups (BG11 to BGn4), said reserve battery being connected when a battery (B1 to Bx) of the battery group (BG11 to BGn4) has been determined as faulty and replacing the faulty battery.

10. Battery storage installation according to one of Claims 7 to 9, **characterized in that** the starter batteries (B1 to Bx) are old batteries, the capacity of which has dropped below a defined prescribed percentage, based on the rated capacity thereof.

## Revendications

1. Procédé pour faire fonctionner un équipement d'accumulation à batterie destiné à délivrer une forte puissance électrique, comprenant une pluralité de batteries (B1 à Bx) rechargeables de manière cyclique, lesquelles sont regroupées en plusieurs groupes de batteries (BG11 à BGn4), les batteries (B1 à Bx) utilisées étant des batteries de démarrage de véhicule automobile et/ou des batteries de démarrage de type accumulateur au plomb, et les groupes de batteries (BG11 à BGn4) alimentant directement, chronologiquement l'un après l'autre, pendant des portions de temps de décharge (t1 à t30) courtes dépendant respectivement de l'état de charge du groupe de batteries (BG11 à BGn4) correspondant, avec un courant de décharge élevé, un réseau d'alimentation public (2) qui est un réseau à basse tension ou un réseau à moyenne tension ou un réseau à haute tension ou un réseau à très haute tension, de sorte que les portions de temps de décharge (t1 à t30) courtes qui se succèdent directement produisent un courant de décharge (I) élevé pendant une période de décharge (T1) ininterrompue plus longue, et
plusieurs groupes de batteries (BG11 à BGn) étant branchés en parallèle pendant une opération de décharge, de telle sorte que pendant une période de charge (T2) décalée dans le temps par rapport à la période de décharge (T1), les groupes de batteries (BG11 à BGn) sont branchés en parallèle afin de répartir le courant de charge sur les groupes de batteries (BG11 à BGn) et charger les batteries avec un courant de charge plus faible par rapport aux courants de décharge élevés.

2. Procédé selon la revendication 1, **caractérisé en ce que** deux groupes de batteries (BG11 à BG13) ou plus sont branchés en parallèle pendant une portion de temps de décharge (t1 à t30) et forment ainsi une combinaison parallèle (PV1), et **en ce que** plusieurs combinaisons parallèles (PV1 à PVn) injectent, chronologiquement l'une après l'autre pendant les portions de temps de décharge (t1 à t30) courtes, un courant de décharge (I) dans le réseau d'alimentation (2).

3. Procédé selon l'une des revendications 1 ou 2, **caractérisé en ce que** pour la formation de groupes de batteries (BG11 à BGn4), une classification des batteries (B1 à Bx) présentes est tout d'abord effectuée au moyen d'une mesure de leurs propriétés électriques, et **en ce que** les batteries (B1 à Bx) respectives ayant une classification du même type sont regroupées dans un ou plusieurs groupes de batteries (BG11 à BG13) du même type.

4. Procédé selon la revendication 3, **caractérisé en ce que** la capacité d'accumulation des batteries (B1 à Bx) individuelles est mesurée pour la classification, et **en ce que** les batteries ayant une capacité d'accumulation au moins approchante sont regroupées en groupes de batteries (BG11 à BG13 ; BG21, BG22 ; BGn1 à BGn4).

5. Procédé selon l'une des revendications précédentes, **caractérisé en ce que** les batteries (B1 à Bx) de chaque groupe de batteries (BG11 à BGn4) sont soumises à intervalles de temps réguliers à un contrôle de l'aptitude fonctionnelle, et **en ce qu'**une batterie (B1 à Bx) qui est ici constatée défectueuse est déconnectée du groupe de batteries (BG11 à BGn4) et remplacée par une mise en circuit d'une batterie de réserve présente dans le groupe de batteries (BG11 à BGn4) concerné.

6. Procédé selon l'une des revendications précédentes, **caractérisé en ce que** les batteries de démarrage (B1 à Bx) utilisées sont des batteries usagées dont la capacité a chuté au-dessous d'un pourcentage préétabli défini par rapport à leur capacité nominale.

7. Équipement d'accumulation à batterie conçu pour mettre en oeuvre un procédé selon l'une des revendications précédentes, comprenant une pluralité de batteries (B1 à Bx) rechargeables de manière cyclique qui sont regroupées en groupes de batteries (BG11 à BGn4), les batteries (B1 à Bx) étant formées par des batteries de démarrage de véhicule automobile et/ou des batteries de démarrage de type accumulateur au plomb, et un dispositif de commutation (1) étant présent pour réaliser un branchement en parallèle optionnel de groupes de batteries (BG11 à BGn4) individuels ou multiples en vue de l'injection de courant dans le réseau d'alimentation (2), le dispositif de commutation étant conçu pour brancher plusieurs groupes de batteries (BG11 à BGn) en parallèle pendant une opération de charge de telle sorte que pendant une période de charge (T2) décalée dans le temps par rapport à la période de décharge (T1), les groupes de batteries (BG11 à BGn) sont branchés en parallèle afin de répartir le courant de charge sur les groupes de batteries (BG11 à BGn) et charger les batteries avec un courant de charge plus faible par rapport aux courants de décharge élevés.

8. Équipement d'accumulation à batterie selon la revendication 7, **caractérisé en ce que** les batteries (B1 à Bx) d'un groupe de batteries (BG11 à BGn4) possèdent respectivement au moins approximativement une capacité de charge identique, **en ce qu'**il existe plusieurs classes de groupes de batteries (BG11 à BGn4) ayant des paramètres de puissance différents, et **en ce que** le dispositif de commutation (1), en cas de besoin, effectue une permutation d'un groupe de batteries (par exemple BG11) d'une classe de puissance donnée sur un autre groupe de batteries (par exemple BG12) de la même classe de puissance.

9. Équipement d'accumulation à batterie selon l'une des revendications 7 ou 8, **caractérisé en ce que** dans les groupes de batteries (BG11 à BGn4), il existe à chaque fois au moins une batterie de réserve qui, en cas d'un défaut constaté sur une batterie (B1 à Bx) du groupe de batteries (BG11 à BGn4), est mise en circuit et remplace la batterie défectueuse.

10. Équipement d'accumulation à batterie selon l'une des revendications 7 à 9, **caractérisé en ce que** les batteries de démarrage (B1 à Bx) sont des batteries usagées dont la capacité a chuté au-dessous d'un pourcentage préétabli défini par rapport à leur capacité nominale.
